# EUROPEAN PATENT SPECIFICATION

(11) **EP 3 584 602 B1**
(45) Date of publication and mention of the grant of the patent: **02.04.2025**
(21) Application number: 18754028.1
(22) Date of filing: 15.02.2018
(51) Int. Cl.: G01S 7/489, G01S 7/486, G01S 7/487, G01S 17/10, G01S 17/42, G02B 26/10

(54) **LIGHT SCANNING DEVICE AND CONTROL METHOD**
LICHTABTASTVORRICHTUNG UND STEUERUNGSVERFAHREN
DISPOSITIF DE BALAYAGE OPTIQUE ET PROCÉDÉ DE COMMANDE

(30) Priority: 15.02.2017 JP 2017026094
(43) Date of publication of application: 25.12.2019
(73) Proprietor: Pioneer Corporation, Tokyo 113-0021 (JP)
(72) Inventor: FURUKAWA, Junichi, Tokyo 113-0021 (JP); KAWAMURA, Yuji, Tokyo 112-0002 (JP); MIYANABE, Shogo, Tokyo 112-0002 (JP)
(74) Representative: Vossius & Partner Patentanwälte Rechtsanwälte mbB
(86) International application number: PCT/JP2018/005309
(87) International publication number: WO 2018/151226

(56) References cited:
- EP-A1- 3 124 996
- WO-A1-2014/032831
- JP-A- 2001 159 681
- JP-A- 2001 194 458
- JP-A- 2014 215 157
- US-A1- 2012 261 516
- US-A1- 2016 320 486

## Description

### TECHNICAL FIELD

The present invention relates to a light scanning device and a control method of the light scanning device.

### BACKGROUND ART

There is a device that uses light to measure a distance to an object positioned outside. An example of a technique regarding such a device is disclosed in the following Patent Document 1, for example.

In Patent Document 1, a technique for avoiding saturation of a specific pixel without adversely affecting measurement of other pixels by adjusting power of laser light at a time interval equal to or shorter than a time interval for outputting the laser light is disclosed.

Patent Document 2 describes an erroneous detection restraining circuit for a laser range finder in which each reflected light reflected by at least one object of pulsed laser light emitted by a light emitting element reaches a light receiving element, and distance information to the at least one object is acquired based on an amount of time from a light emission starting time for the pulsed laser light to an output starting time from the light receiving element.

Patent Document 3 describes a LADAR sensor, with an adaptive controller with at least one control output, which adapts an optoelectronic conversion gain of a detector array of light detecting pixels.

Patent Document 4 describes a range imaging apparatus and a range imaging method using a time-of-flight (TOF) system in which distance information of a subject is obtained based on the time difference arising between signal light and reflection light when the signal light is emitted toward, reaches and reflects off the subject, and the reflection light is received.

### RELATED DOCUMENT

### PATENT DOCUMENT

[Patent Document 1] Japanese Laid-open Patent Publication No. 2016-205884
[Patent Document 2] EP 3 124 996 A1
[Patent Document 3] US 2012/261516 A1
[Patent Document 4] US 2016/320486 A1

### SUMMARY OF THE INVENTION

### TECHNICAL PROBLEM

In the technique of Patent Document 1, light emitted from a light source and light reflected by an external object pass through different optical systems, but in a structure where these light utilize the same optical system, for example, the following problems may occur. That is, when light is emitted from the light source, light reflected by a member inside a device may leak out to a light receiving element side through the optical system, and the light receiving element may be saturated at an unintended timing. In such a case, a light reception timing of light reflected by the external object cannot be accurately grasped.

As a problem to be solved by the present invention, provision of a technique for accurately grasping a light reception timing of light reflected by an object positioned outside in a device for measuring a distance by light may be included as an example, in the device.

### SOLUTION TO PROBLEM

The present invention is defined in the claims.

### BRIEF DESCRIPTION OF THE DRAWINGS

The object described above, and other objects, features, and advantages will become more apparent from the preferred embodiments described below and the following figures associated therewith.

Fig. 1 is a block diagram conceptually illustrating a functional configuration of a light scanning device.
Fig. 2 is a diagram for explaining execution timings of a process by a control unit.
Fig. 3 is a block diagram illustrating a functional configuration of a light scanning device in a first specific example.
Fig. 4 is a block diagram illustrating a functional configuration of a light scanning device in a second specific example.
Fig. 5 is a block diagram illustrating a functional configuration of a light scanning device in a third specific example. Fig. 6 is a diagram illustrating a hardware configuration of a control unit and a signal processing unit.
Fig. 7 is a block diagram conceptually illustrating a functional configuration of a light scanning device in Embodiment 2.
Fig. 8 is a flowchart illustrating a flow a process of a control unit in Embodiment 2.

### DESCRIPTION OF EMBODIMENTS

Hereinafter, embodiments of the present invention will be described with reference to the drawings. In all the drawings, the same components are denoted by the same reference numerals, and the description thereof will not be appropriately repeated.

### [Embodiment 1]

### {Functional Configuration}

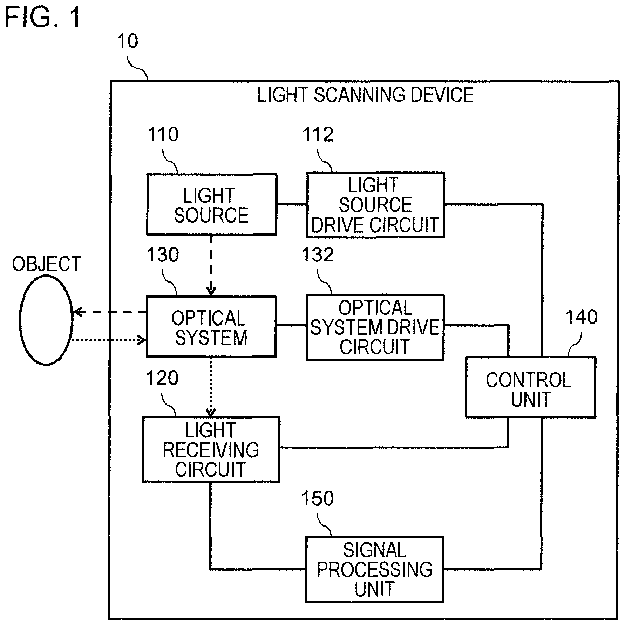

Fig. 1 is a block diagram conceptually illustrating a functional configuration of a light scanning device in Embodiment 1. The light scanning device according to the present invention is, for example, a so-called light detecting and ranging (LIDAR) device mounted on a moving object. Here, the expression "being mounted on a moving object" means not only being incorporated into the moving object as a part of the moving object but also installing a separately assembled single device inside the moving object or outside the moving object. In the following, although the description is made on the assumption that the moving object is a vehicle, the moving object is not limited to the vehicle. For example, the moving object may be an airplane, a ship, or a robot (for example a drone) capable of autonomous navigation. As illustrated in Fig. 1, a light scanning device 10 includes a light source 110, a light receiving circuit 120 including a light receiving element (not illustrated), an optical system 130, and a control unit 140. In the example of this figure, the light scanning device 10 further includes a signal processing unit 150. In Fig. 1, the solid line conceptually represents a connection relation between respective components by wiring and the like, the broken line conceptually represents a path of light (hereinafter also denoted by "emission light") emitted from the light source 110, and the dotted line conceptually represent a path of light (hereinafter also denoted by "external reflection light") reflected from the emission light described above by a certain object positioned outside the light scanning device 10.

The light source 110 is configured by a circuit including a light emitting element such as, for example, a laser diode (LD). The light receiving circuit 120 is configured to include a light receiving element such as, for example, an avalanche photo diode (APD).

The optical system 130 is configured to include a movable reflection portion (for example, a mirror) that changes a traveling direction of light, and a condenser lens. With this configuration, the optical system 130 can direct emission light emitted by the light source 110 toward the outside of the light scanning device 10. Also, with this configuration, the optical system 130 can direct external reflection light by an object positioned outside the light scanning device 10 toward the light receiving element of the light receiving circuit 120.

The control unit 140 transmits a control signal to a light source drive circuit 112, and controls the timing of emitting light from the light source 110. The control unit 140 also transmits a control signal to the light receiving circuit 120, and controls an operation of the light receiving circuit 120. The control unit 140 also transmits a control signal to an optical system drive circuit 132, and controls an operation of the optical system 130. The control unit 140 can also receive a processing result of a signal processing unit 150 and output the result to a control device such as an electronic control unit (ECU) that performs operation control of the vehicle.

The signal processing unit 150 can generate a measurement result (for example, a distance image) in a scannable range of the light scanning device 10 based on a signal output from the light receiving circuit 120 using, for example, a time-of-flight (TOF) method or the like. The measurement result generated by the signal processing unit 150 is output to a control device (for example, an ECU) (not illustrated) that performs operation control of the vehicle and the like through the control unit 140.

In the example illustrated in Fig. 1, a structure in which the emission light and the external reflection light pass through the same optical system 130 is adopted. In such a structure, when light is emitted from the light source 110, the emitted emission light is reflected by an internal member (for example, a mirror or a lens of the optical system 130) of the light scanning device 10 and unnecessary reflection light (hereinafter, also denoted by "internal reflection light") may occur. Then, there is also a possibility that the light receiving element of the light receiving circuit 120 is saturated at an unintended timing (a timing different from the timing at which the external reflection light from the measurement range returns) by incidence of the internal reflection light onto the light receiving surface of the light receiving element of the light receiving circuit 120 before the external reflection light. In this case, a problem that a light reception timing of the external reflection light cannot be accurately measured may be generated. For this problem, it is necessary to devise matters that the light receiving element is not saturated until the external reflection light reaches the light receiving surface of the light receiving element.

Accordingly, the control unit 140 executes a process of reducing the electric charges accumulated in the light receiving element of the light receiving circuit 120 in a period (hereinafter, also denoted by "first period") determined based on the timing when the emission light from the light source 110 is emitted. The first period is defined so as not to overlap a period (hereinafter, also denoted by "second period") during which the light scanning device 10 measures the distance. Here, the time taken for the light receiving circuit 120 to detect the external reflection light after the light source 110 emits the emission light is determined by a distance between the light scanning device 10 and an object positioned outside. Thus, if a measurement target range (the upper limit value and the lower limit value of the distance to be measured) of the light scanning device 10 is determined, the second period described above can be determined based on the emission timing of the emission light.

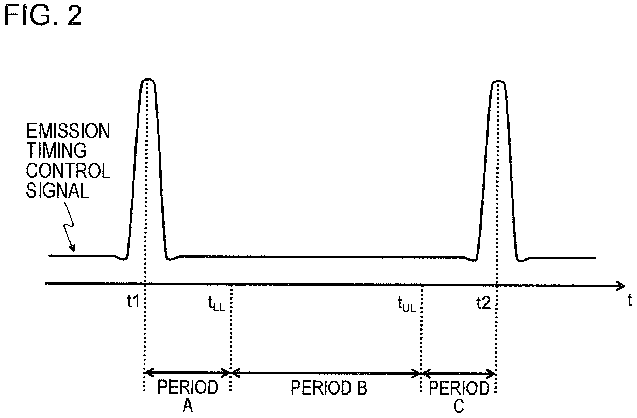

Hereinafter, the execution timing of a process by the control unit 140 will be described with reference to Fig. 2. Fig. 2 is a diagram for explaining the execution timing of the process by the control unit 140.

The horizontal axis of Fig. 2 is a time axis. In the example of the figure, the control unit 140 transmits a signal (emission timing control signal) for emitting light from the light source 110 to the light source drive circuit 112 at time t1 and time t2. The light source drive circuit 112 operates in accordance with the emission timing control signal, and causes light to be emitted from the light source 110. Hereinafter, light emitted from the light source 110 at time t1 is also denoted by "first emission light", and light emitted from the light source 110 at time t2 is also referred to as "second emission light". The light source drive circuit 112 causes light to be emitted from the light source 110 based on the emission timing control signal.

In this case, the time when it is predicted that the external reflection light reflected by the object positioned in the measurement target range of the light scanning device 10 is detected by the light receiving element 1201 can be grasped in advance based on the emission timing of light of the light source 110 as described above. In Fig. 2, these times are represented as time t_{LL} and time t_{UL}. The time t_{LL} in the figure indicates the timing at which the external reflection light by the object positioned at the lower limit value of the distance to be measured is detected by the light receiving element 1201. Further, time t_{UL} in the figure indicates the timing at which the external reflection light by the object positioned at the upper limit value of the distance to be measured is detected by the light receiving element 1201.

The period A in the figure corresponds to "a period from when light is irradiated from the light source 110 to when the external reflection light by the object positioned at the lower limit value of the measurement target range of the light scanning device 10" returns. The period B in the figure corresponds to "a period during which the light scanning device 10 measures a distance". Further, the period C in the figure corresponds to "a period from when external reflection light by the object positioned at the upper limit value of the measurement target range of the light scanning device 10 returns to when the light source 110 emits the next emission light".

In order to avoid the influence of the internal reflection light that may be generated by emission of the first emission light, the control unit 140 starts the process of reducing the electric charges accumulated in the light receiving element of the light receiving circuit 120 at a point in time slightly before the emission timing (time t1) of the first emission light or the emission timing. Then, the control unit 140 can determine the timing to end the process of the control unit 140, for example, based on the lower limit value of the distance measured by the light scanning device 10. The control unit 140 can end the process of reducing the electric charges accumulated in the light receiving element of the light receiving circuit 120 in accordance with an end point (time t_{LL}) of the period A. Further, in consideration of followability of the light receiving element 1201, the control unit 140 may end the process of reducing the electric charges accumulated in the light receiving element of the light receiving circuit 120 at a timing slightly before the end point (time t_{LL}) of the period A.

In order to avoid the influence of the internal reflection light which may be generated by emission of the second emission light (light emitted next to the first emission light), the control unit 140 can determine the timing to start the process of reducing the electric charges accumulated in the light receiving element of the light receiving circuit 120 based on the emission timing (time t2) of the second emission light. The control unit 140 can start the process of reducing the electric charges accumulated in the light receiving element of the light receiving circuit 120, for example, according to the timing (time t2) at which the second emission light is emitted. For example, the control unit 140 may start the process of reducing the electric charges accumulated in the light receiving element of the light receiving circuit 120 at a time slightly before the time t2.

The control unit 140 may determine the start timing of the process of reducing the electric charges accumulated in the light receiving element of the light receiving circuit 120 based on the upper limit value of the distance measured by the light scanning device 10. The control unit 140 can start the process of reducing the electric charges accumulated in the light receiving element of the light receiving circuit 120 according to an end point (time t_{UL}) of the period B. Further, in order to accurately grasp the light reception timing of the external reflection light by the object positioned at the upper limit value of the measurement target range, the control unit 140 may start the process of reducing the electric charges accumulated in the light receiving element of the light receiving circuit 120 at a timing slightly after the end point (time t_{UL}) of the period B.

As described above, in this embodiment, the process of reducing the electric charges accumulated in the light receiving element of the light receiving circuit 120 is executed at a stage before detecting the external reflection light by the object within the measurement target range positioned outside the light scanning device 10. With this configuration, it is possible to prevent the light receiving element 1201 from being saturated by the internal reflection light by a member inside the light scanning device 10 before the external reflection light by the object within the measurement range reaches the light receiving element 1201 of the light scanning device 10. With this configuration, it is possible to accurately grasp the light reception timing of the external reflection light by the object present within the measurement target range of the light scanning device 10. As a result, the external reflection light from the object within the measurement target range positioned outside the light scanning device 10 can be detected with high accuracy by the light receiving element, and measurement accuracy of the distance to the object positioned outside the light scanning device 10 can be enhanced.

### {Specific Example of Processing by Control Unit 140}

Hereinafter, specific processes of the control unit 140 will be described by citing some specific examples.

### <First Specific Example>

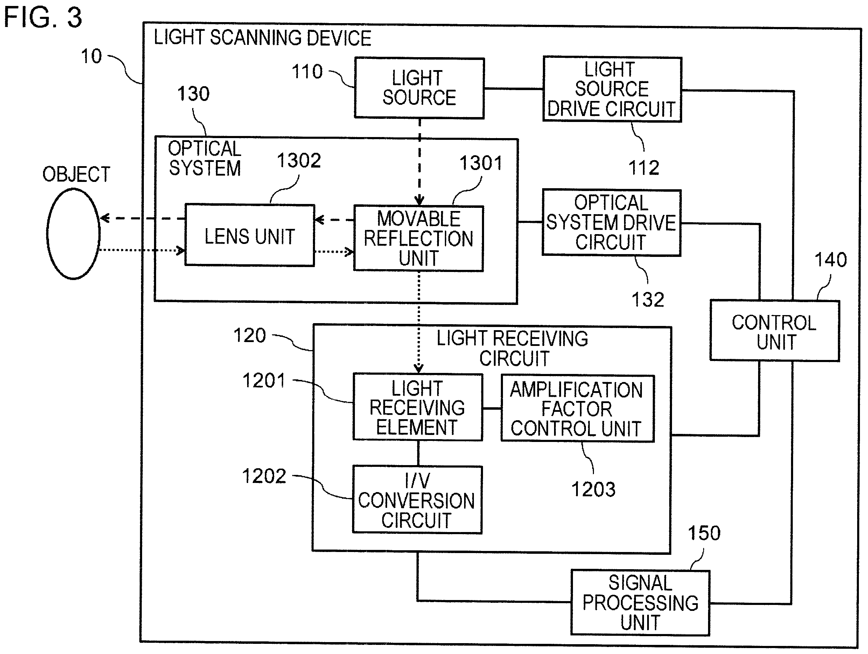

Fig. 3 is a block diagram illustrating a functional configuration of a light scanning device in a first specific example.

In Fig. 3, the optical system 130 includes a movable reflection portion 1301 and a lens portion 1302. The movable reflection portion 1301 includes one mirror configured to be rotatable in each of at least two directions (two axes) of the height direction and the lateral direction. This mirror is, for example, a micro electro mechanical system (MEMS) mirror. The movable reflection portion 1301 may be configured to be able to scan in each of two directions, for example, by a MEMS mirror capable of scanning in one direction and a motor capable of scanning in a vertical direction to the one direction. In addition, the movable reflection portion 1301 may be configured by two MEMS mirrors which are disposed to be orthogonal to each other and can be scanned in one direction. With such a configuration, the movable reflection portion 1301 controls the traveling direction of light emitted from the light source 110 and the traveling direction of the external reflection light reflected by the object. The lens portion 1302 is a condenser lens configured of a single lens or a plurality of lenses.

In Fig. 3, the light receiving circuit 120 includes a light receiving element 1201, an I/V conversion circuit 1202, and an amplification factor control unit 1203. The light receiving element 1201 is, for example, an APD. The I/V conversion circuit 1202 is a circuit that converts the current due to the electric charges accumulated in the light receiving element 1201 into a voltage. The signal processing unit 150 can generate a distance image and the like based on a signal from the I/V conversion circuit 1202. The amplification factor control unit 1203 adjusts the amplification factor of the light receiving element 1201 by controlling a voltage value to be applied to the light receiving element 1201 according to a control signal from the control unit 140.

When light is emitted from the light source 110, a portion of the emission light of the light source 110 may be reflected by the movable reflection portion 1301, the lens portion 1302, or the like of the optical system 130 to generate internal reflection light. Then, the internal reflection light may be incident on the light receiving surface of the light receiving element 1201 earlier than the external reflection light by the object. Depending on the amplification factor of the light receiving element 1201, the light receiving element 1201 is saturated by the internal reflection light, and the external reflection light cannot be detected.

In this specific example, the control unit 140 sets the amplification factor of the light receiving element 1201 in a period determined based on the emission timing of the emission light to one tenth or less of an amplification factor for a period of time while the light scanning device 10 measures a distance. For example, when the amplification factor of the light receiving element 1201 for a period of time while the light scanning device 10 measures the distance is "1000", the control unit 140 transmits a control signal for setting the amplification factor of the light receiving element 1201 to "100" in the period determined based on the emission timing of the emission light to the amplification factor control unit 1203. The control unit 140 may transmit a control signal for setting the amplification factor of the period determined based on the emission timing of the emission light to "100" or less to the amplification factor control unit 1203. However, in this case, it is assumed that "the amplification factor of the light receiving element 1201 for a period of time while the light scanning device 10 measures the distance" is larger than "100". The amplification factor control unit 1203 can adjust the amplification factor of the light receiving element 1201 by controlling the voltage to be applied to the light receiving element 1201 according to the control signal from the control unit 140. When the light receiving element 1201 is made of, for example, indium gallium arsenide (InGaAs) APD or the like, the light receiving element 1201 may reach a breakdown voltage with an amplification factor of about 30 times. In such a case, the control unit 140 can operate the light receiving element 1201 with an appropriate range of amplification factor by storing the amplification factor (in the case of InGaAs APD, the amplification factor is "20" or less) according to the characteristics of the light receiving element 1201 in advance in a memory (not illustrated) of the light scanning device 10 or the like.

For example, the control unit 140 may transmit a control signal for causing a voltage less than the breakdown voltage to be applied to the light receiving element 1201 to the amplification factor control unit 1203 so as to operate the light receiving element 1201 in a so-called linear mode. In addition, the control unit 140 may transmit a control signal for causing a voltage near the breakdown voltage (for example, 95% or less of the breakdown voltage) to be applied to the light receiving element 1201 to the amplification factor control unit 1203 so that the light receiving element 1201 operates in a range where the amplification factor is relatively small.

By such a process, the amount of electric charges accumulated in the light receiving element 1201 is reduced, and the light receiving element 1201 is less likely to be saturated. With this configuration, the light receiving element 1201 is prevented from being saturated by the internal reflection light, and the light reception timing of the external reflection light can be accurately grasped.

### <Second Specific Example>

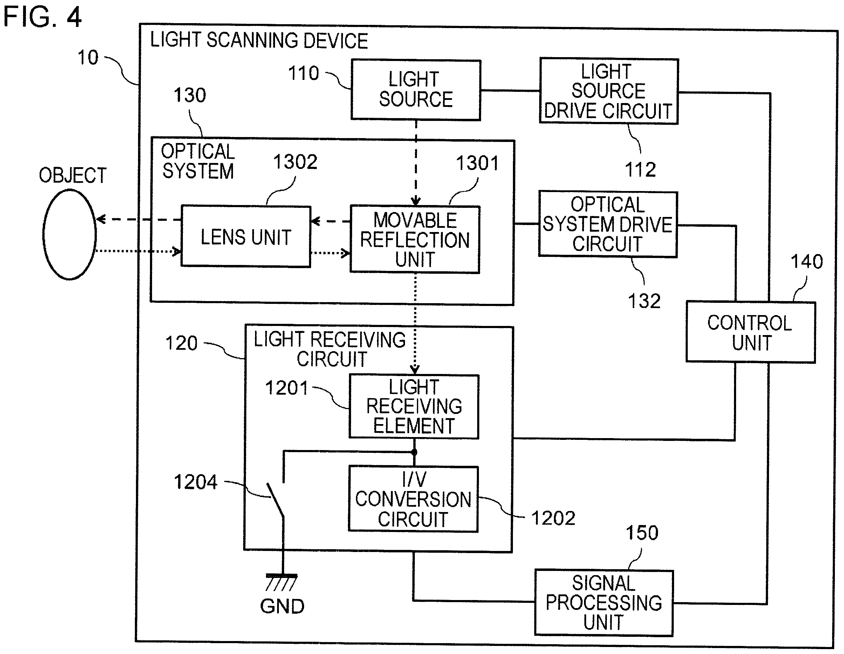

Fig. 4 is a block diagram illustrating a functional configuration of a light scanning device in the second specific example. In the second specific example, the light scanning device 10 has the same configuration as the configuration described in the first specific example except for the following points.

In this specific example, the light receiving circuit 120 further includes a switch element 1204. The switch element 1204 connects one end of the light receiving element 1201 to a ground point GND. The control unit 140 puts the switch element 1204 in an OFF state while the light scanning device 10 measures the distance. In addition, the control unit 140 puts the switch element 1204 in an ON state in a period determined based on the emission timing of the emission light.

When the switch element 1204 is turned on, the light receiving element 1201 is grounded. Then, the electric charge generated by light incident on the light receiving surface of the light receiving element 1201 is not accumulated in the light receiving element 1201 and flows to the ground point GND. Since the electric charges accumulated in the light receiving element 1201 is reset by turning on the switch element 1204, an amount of electric charges accumulated in the light receiving element 1201 is reduced, and the light receiving element 1201 is less likely to be saturated. With this configuration, the light receiving element 1201 is prevented from being saturated by the internal reflection light, and the light reception timing of the external reflection light can be accurately grasped.

### <Third Specific Example>

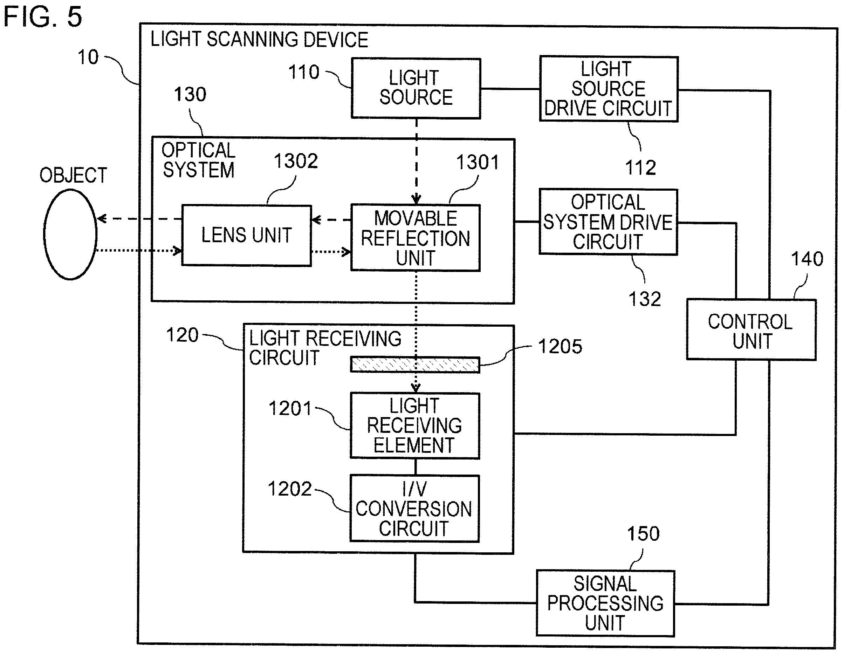

Fig. 5 is a block diagram illustrating a functional configuration of a light scanning device in a third specific example. In the third specific example, the light scanning device 10 has the same configuration as the configuration described in the first specific example except for the following points.

In this specific example, the light receiving circuit 120 further includes a filter unit 1205 that prevents light from entering the light receiving surface of the light receiving element 1201. The control unit 140 operates the filter unit 1205 in a period determined based on the emission timing of the emission light. For example, the filter unit 1205 is configured by an optical element whose refractive index is changed by an applied voltage. In this case, the control unit 140 can divert the internal reflection light from the light receiving surface of the light receiving element 1201 by adjusting the voltage value applied to the filter unit 1205, in the period determined based on the emission timing of the emission light. The filter unit 1205 may be realized by a shutter that physically covers the light receiving surface. In this case, the control unit 140 can prevent the internal reflection light from entering the light receiving surface of the light receiving element 1201 by closing the shutter of the filter unit 1205 in the period determined based on the emission timing of the emission light.

With such processing, the amount of electric charges accumulated in the light receiving element 1201 is reduced and the light receiving element 1201 is less likely to be saturated. With this configuration, the light receiving element 1201 is prevented from being saturated by the internal reflection light, and the light reception timing of the external reflection light can be accurately grasped.

As described above, the control unit 140 drives the light receiving element 1201 during a period in which the reflection light reflected by the object is returned to the light scanning device 10, and prevents the electric charge from accumulating in the light receiving element 1201 (to release the electric charge by being grounded or to mask the light receiving surface) or makes it difficult for the electric charge to be accumulated in the light receiving element 1201 (to lower the amplification factor) during a period other than the period. With this configuration, it is possible to prevent the light receiving element 1201 from being saturated by the internal reflection light generated in the light scanning device 10, and to accurately grasp the light reception timing of the external reflection light by an object present in the surroundings.

### {Hardware Configuration}

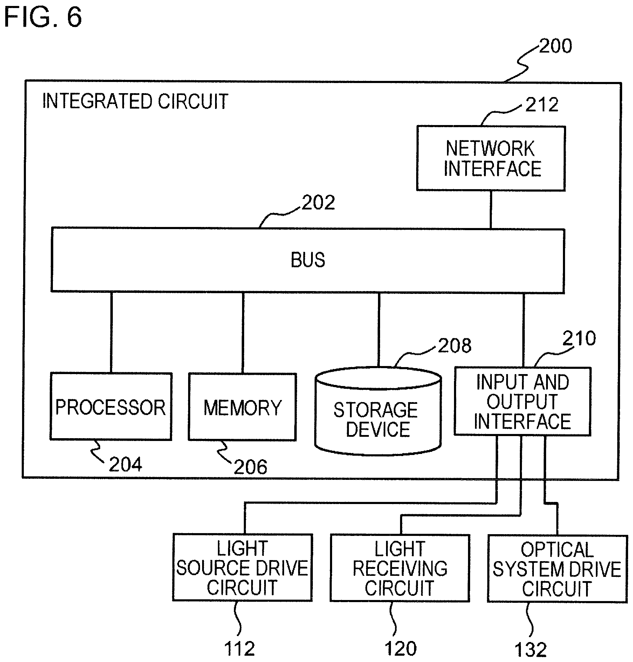

Fig. 6 is a diagram illustrating a hardware configuration of the control unit 140 and the signal processing unit 150. In the figure, the control unit 140 and the signal processing unit 150 are mounted using an integrated circuit 200. The integrated circuit 200 is, for example, a system-on-a-chip (SoC).

The integrated circuit 200 includes a bus 202, a processor 204, a memory 206, a storage device 208, an input and output interface 210, and a network interface 212. The bus 202 is a data transmission path for the processor 204, the memory 206, the storage device 208, the input and output interface 210, and the network interface 212 to mutually transmit and receive data. However, a method of connecting the processors 204 and the like to one another is not limited to the bus connection. The processor 204 is an arithmetic processing unit implemented using a microprocessor or the like. The memory 206 is a memory implemented using a random access memory (RAM) or the like. The storage device 208 is a storage device realized using a read only memory (ROM), a flash memory, or the like.

The input and output interface 210 is an interface for connecting the integrated circuit 200 to peripheral devices. In the figure, the light source drive circuit 112, the light receiving circuit 120, and the optical system drive circuit 132 are connected to the input and output interface 210.

The network interface 212 is an interface for connecting the integrated circuit 200 to a communication network. This communication network is, for example, a controller area network (CAN) communication network. The light scanning device 10 can be connected to the CAN communication network through the network interface 212, and can communicate with an ECU or the like that controls the operation of the vehicle. A method of connecting the network interface 212 to the communication network may be wireless connection or wired connection.

The storage device 208 stores a program module for realizing the control unit 140 and a program module for realizing the function of the signal processing unit 150. The processor 204 reads these program modules into the memory 206 and executes the program modules to realize the functions of the control unit 140 and the signal processing unit 150.

The hardware configuration of the integrated circuit 200 is not limited to the configuration illustrated in this figure. For example, the program modules may be stored in memory 206. In this case, the integrated circuit 200 may not include the storage device 208.

### [Embodiment 2]

In Embodiment 2, the light scanning device 10 has the same configuration as the configuration described in Embodiment 1 except for the following points. That is, the light scanning device 10 according to Embodiment 2 determines at least one of the start timing and the end timing of the process executed by the control unit 140 according to the distance from the current position to an object (planimetric features) to be measured. In other words, the light scanning device 10 described in Embodiment 2 changes at least one of the start timing and the end timing of the process executed by the control unit 140, according to the distance from the current position to the object (planimetric features) to be measured.

### {Functional Configuration}

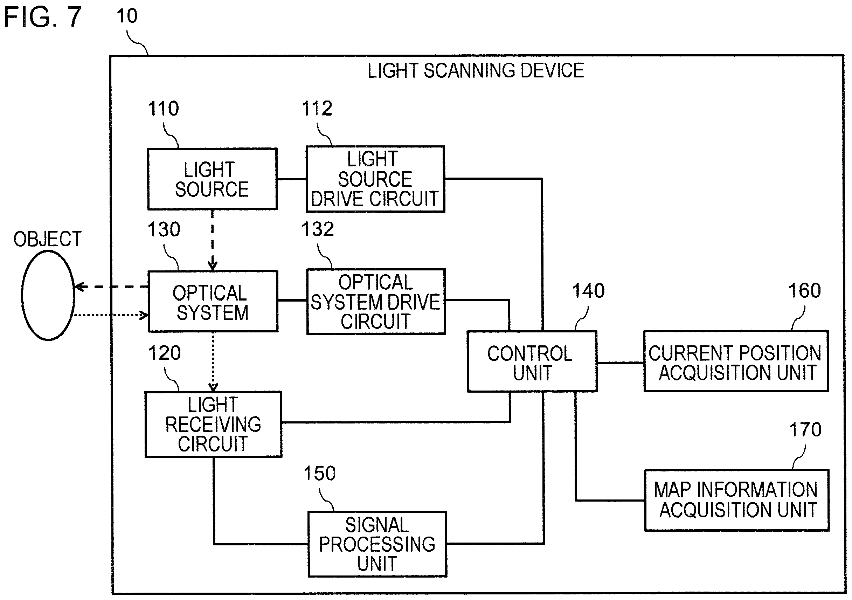

Fig. 7 is a block diagram conceptually illustrating a functional configuration of a light scanning device in Embodiment 2. In Embodiment 2, in addition to the configuration described in Fig. 1, the light scanning device 10 further includes a current position acquisition unit 160 that acquires information regarding the current position of the light scanning device 10 or a moving object (for example, a vehicle) on which the light scanning device 10 is mounted and a map information acquisition unit 170 that acquires map information including feature information and the like related to features.

The current position acquisition unit 160 is configured to include, for example, a receiver that receives a signal from a positioning satellite system such as a global positioning system (GPS). The current position acquisition unit 160 may be configured to acquire information on the current position of the vehicle from other equipment provided with a receiver that receives a signal from the positioning satellite system or a device (for example, a GPS receiver disposed in a vehicle) by communicating with the other equipment or device. Further, the current position acquisition unit 160 may be configured to communicate with a control unit in the moving object through the CAN or the like and to acquire current position information of the vehicle from the control unit.

The map information acquisition unit 170 acquires map information and the like from a map server device by communicating with, for example, the map server device (not illustrated) that stores and manages map information. In this case, the map information acquisition unit 170 may store, for example, the acquired map information in a storage unit (not illustrated) included in the light scanning device 10. The map information acquisition unit 170 can communicate with the map server device at any timing. For example, the map information acquisition unit 170 can communicate with the map server device according to an instruction input from a user or a predetermined schedule. The map information to be acquired by the map information acquisition unit 170 may be stored in advance in a storage unit (not illustrated) included in the light scanning device 10. In this case, the map information acquisition unit 170 can read out the map information from the storage unit as needed. The map information includes feature information on features, in addition to information on roads through which the vehicle passes. Examples of planimetric features include, for example, signboards, signs, buildings or markings (for example, lane boundaries and stop lines) drawn on road surfaces. The planimetric feature information includes position information of the planimetric features described above, a planimetric feature ID for identifying the planimetric features, attribute information indicating an attribute of the planimetric features, and the like.

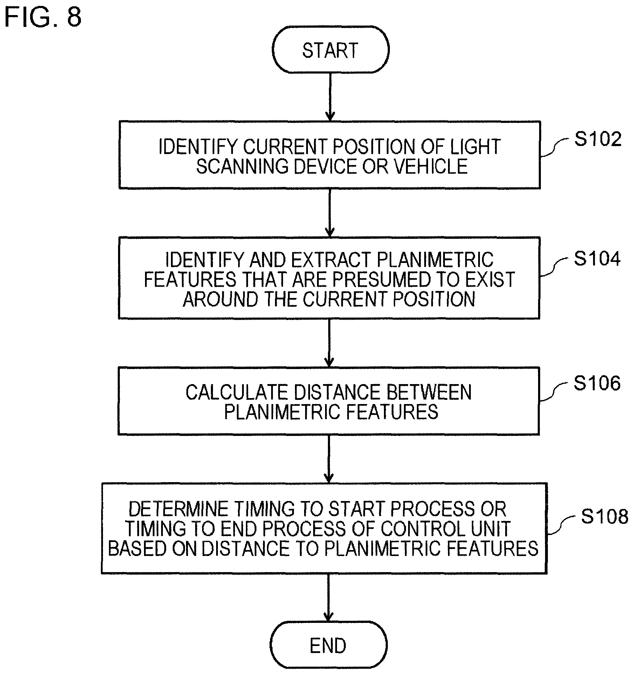

Hereinafter, with reference to Fig. 8, a flow of operations when determining timing to start a process to be executed by the control unit 140 or timing to end the process will be described. Fig. 8 is a flowchart illustrating a flow of a process of the control unit 140 in Embodiment 2.

The control unit 140 identifies a current position of the light scanning device 10 or the vehicle from current position information acquired by the current position acquisition unit 160 (S102).

Then, with reference to map information (the position information of planimetric features included in the planimetric feature information) acquired by the map information acquisition unit 170, the control unit 140 identifies and extracts planimetric features that are presumed to exist around the current position identified in the process of S102 (S104). In this process, the control unit 140 may identify and extract, for example, the planimetric features that are presumed to be within a measurable range of the light scanning device 10 from the current position. The measurable range of the light scanning device 10 is stored in advance in a storage unit (not illustrated) such as a memory or a storage of the light scanning device 10, for example.

Then, based on the position information of the planimetric features identified in the process of S104 and the current position information acquired by the current position acquisition unit 160, the control unit 140 calculates the distance between the planimetric features identified in the process of S104 and the current position (the distance to the planimetric features) (S106).

Then, the control unit 140 determines, according to the distance calculated in S106, the timing to start the process of reducing the electric charges accumulated in the light receiving element of the light receiving circuit 120 or the timing to end the process (S108). Hereinafter, the operation of the control unit 140 in this embodiment will be specifically illustrated.

As a first example, when the calculated distance to the planimetric features is close to the lower limit value of the measurement target range of the light scanning device 10 (in other words, the calculated distance to the planimetric features is relatively short), the control unit 140, similarly as in Embodiment 1 described above, the control unit 140 determines the timing to start the process to be the emission timing of the first emission light (time t1) in Fig. 2 or a point in time slightly earlier than the timing. The control unit 140 determines the timing to end the process to be the end point (time t_{LL}) of the period A corresponding to "a period from when light is emitted from the light source 110 to when the external reflection light by the object positioned at the lower limit value of the measurement target range of the light scanning device 10 returns".

As a second example, when the calculated distance to the planimetric features is relatively long, the control unit 140 can make the timing to end the process later than the end point (time t_{LL}) of the period A described above. In other words, the control unit 140 can delay the timing to end the process as the calculated distance to the planimetric features increases. Furthermore, in other words, as the difference between the calculated distance to the planimetric features and the lower limit value of the measurement target range of the light scanning device 10 is larger, the control unit 140 can delay the timing to end the process. This is due to the following reason. That is, the longer the calculated distance to the planimetric features (in other words, the more the planimetric features to be measured are present at a position farther than the lower limit value of the measurement target range of the light scanning device 10), the longer the time until the reflection light reflected by the planimetric features returns to the light scanning device 10. Therefore, there is no need to end the process of reducing the electric charges accumulated in the light receiving element of the light receiving circuit 120 or the like at the end point (time t_{LL}) of the period A described above. In other words, even if the timing to end the process for reducing the electric charges accumulated in the light receiving element of the light receiving circuit 120 or the like is put backward in time, the possibility of adversely affecting reception of the reflection light from the planimetric features becomes low. From this, the control unit 140 can put the timing to end the process and the like to be later in time than the end point (time t_{LL}) of the period A. By doing as described above, the control unit 140 can execute the process of reducing the electric charges accumulated in the light receiving element of the light receiving circuit 120 and the like using a longer period than that of Embodiment 1, and can prevent the light receiving element 1201 from being saturated more accurately.

Embodiment 2 described above be described from another viewpoint. Embodiment 1 described above has a concept that the period A in Fig. 2 is "a period from when light is irradiated from the light source 110 to when external reflection light reflected by the object positioned at the lower limit value of the measurement target range of the light scanning device 10 returns", and the control unit 140 executes a process within the range A. In contrast, Embodiment 2 described above has a concept that the period A which is a period during which the control unit 140 executes the process is set according to the calculated distance to the planimetric features (that is, the end point of the period A is shifted backward in time).

As a modification example of this embodiment, for example, when the time corresponding to the calculated distance to the planimetric features is around the center of the period B (that is, the planimetric features are positioned near the center of the measurement target range of the light scanning device 10), the control unit 140 may set the end point of the period A to a predetermined time later than the time t_{LL} and set a start point of the period C to a predetermined time earlier than the time t_{UL}. Also, for example, when the time corresponding to the calculated distance to the planimetric feature is around t_{UL} (that is, the planimetric features are positioned near the upper limit of the measurement target range of the light scanning device 10), the control unit 140 may change only the end point of the period A to a predetermined time later than the time t_{LL}, and set the start point of the period C to the time t_{UL} as it is.

## Claims

1. A light scanning device (10) comprising:
a light source (110) that emits emission light;
a light receiving element (1201) that receives reflection light of the emission light reflected by an object positioned outside;
an optical system (130) that directs the emission light emitted from the light source (110) to the outside and directs the reflection light to the light receiving element (1201); and
a control unit (140) that executes a process of reducing electric charges accumulated in the light receiving element (1201) by internal reflection light generated by emission of the emission light at a time point before the light receiving element (1201) receives the reflected light,
wherein the control unit (140) determines a timing to end the process according to a lower limit value of a distance to be measured by the light scanning device (10),
**characterized in that**
the light receiving element (1201) is connected to a ground point through a switch element (1204), and
the control unit (140) puts the switch element (1204) in an OFF state while the light scanning device (10) measures a distance, and, as the process, puts the switch element (1204) in an ON state.

2. The light scanning device (10) according to claim 1,
wherein the light receiving element (1201) is an avalanche photodiode.

3. The light scanning device (10) according to claim 1 or 2,
wherein the control unit (140) determines a timing to start the process according to an emission timing of the emission light or an upper limit value of a distance to be measured by the light scanning device (10).

4. The light scanning device (10) according to any one of claims 1 to 3,
wherein the control unit (140) determines a timing to start the process according to an emission timing of second emission light emitted after first emission light emitted from the light source (110) .

5. The light scanning device (10) according to any one of claims 1 to 4,
wherein the light scanning device (10) is a light detection and ranging (LIDAR) device.

6. A control method of a light scanning device (10) including a light source (110) that emits emission light, a light receiving element (1201) that receives reflection light of the emission light reflected by an object positioned outside, and an optical system (130) that directs the emission light emitted from the light source (110) to the outside and directs the reflection light to the light receiving element (1201), the control method comprising:
a control step of executing a process of reducing electric charges accumulated in the light receiving element (1201) by internal reflection light generated by emission of the emission light at a time point before the light receiving element (1201) receives the reflected light, and
a control step of determining a timing to end the process according to a lower limit value of a distance to be measured by the light scanning device (10),
the method being **characterized in that**
the light receiving element (1201) is connected to a ground point through a switch element (1204), and
the control method further comprising a step for putting the switch element (1204) in an OFF state while the light scanning device (10) measures a distance, and, as the process, puts the switch element (1204) in an ON state .

7. The control method according to claim 6,
wherein the control method further comprises a step of determining a timing to start the process according to an emission timing of the emission light or an upper limit value of a distance to be measured by the light scanning device (10).

8. A light scanning device (10) comprising:
a light source (110) that emits emission light;
a light receiving element (1201) that receives reflection light of the emission light reflected by an object positioned outside;
an optical system (130) that directs the emission light emitted from the light source (110) to the outside and directs the reflection light to the light receiving element (1201); and
a control unit (140) that executes a process of reducing electric charges accumulated in the light receiving element (1201) by internal reflection light generated by emission of the emission light at a time point before the light receiving element (1201) receives the reflected light,
wherein the control unit (140) calculates a distance between a current position of the light scanning device (10) or a moving object on which the light scanning device (10) is mounted and the object and determines at least one of a timing to start the process and a timing to end the process based on the calculated distance,
**characterized in that**
the light receiving element (1201) is connected to a ground point through a switch element (1204), and
the control unit (140) puts the switch element (1204) in an OFF state while the light scanning device (10) measures a distance, and, as the process, puts the switch element (1204) in an ON state.

## Patentansprüche

1. Lichtabtastvorrichtung (10), die aufweist:
eine Lichtquelle (110), die Emissionslicht emittiert;
ein Lichtempfangselement (1201), das Reflexionslicht des Emissionslichts empfängt, das von einem außerhalb angeordneten Objekt reflektiert wird;
ein optisches System (130), das das von der Lichtquelle (110) emittierte Emissionslicht nach außen richtet und das Reflexionslicht zum Lichtempfangselement (1201) richtet; und
eine Steuereinheit (140), die einen Prozess zum Reduzieren von elektrischen Ladungen ausführt, die in dem Lichtempfangselement (1201) durch internes Reflexionslicht angesammelt werden, das durch Emission des Emissionslichts zu einem Zeitpunkt erzeugt wird, bevor das Lichtempfangselement (1201) das reflektierte Licht empfängt,
wobei die Steuereinheit (140) ein Timing zum Beenden des Prozesses gemäß einem unteren Grenzwert einer Entfernung bestimmt, die durch die Lichtabtastvorrichtung (10) gemessen werden soll,
**dadurch gekennzeichnet, dass**
das Lichtempfangselement (1201) über ein Schaltelement (1204) mit einem Erdungspunkt verbunden ist, und
die Steuereinheit (140) das Schaltelement (1204) in einen AUS-Zustand versetzt, während die Lichtabtastvorrichtung (10) eine Entfernung misst, und als den Prozess das Schaltelement (1204) in einen EIN-Zustand versetzt.

2. Lichtabtastvorrichtung (10) nach Anspruch 1,
wobei das Lichtempfangselement (1201) eine Avalanche-Photodiode ist.

3. Lichtabtastvorrichtung (10) nach Anspruch 1 oder 2,
wobei die Steuereinheit (140) ein Timing zum Starten des Prozesses nach einem Emissionstiming des Emissionslichts oder einem oberen Grenzwert einer Entfernung bestimmt, die durch die Lichtabtastvorrichtung (10) gemessen werden soll.

4. Lichtabtastvorrichtung (10) nach einem der Ansprüche 1 bis 3,
wobei die Steuereinheit (140) ein Timing zum Starten des Prozesses nach einem Emissionstiming eines zweiten Emissionslichts bestimmt, das nach dem ersten Emissionslicht emittiert wird, das von der Lichtquelle (110) emittiert wird.

5. Lichtabtastvorrichtung (10) nach einem der Ansprüche 1 bis 4,
wobei die Lichtabtastvorrichtung (10) eine Lichtdetektions- und Entfernungsmessung (LIDAR) Vorrichtung ist.

6. Steuerverfahren für eine Lichtabtastvorrichtung (10), die eine Lichtquelle (110), die Emissionslicht emittiert, ein Lichtempfangselement (1201), das Reflexionslicht des Emissionslichts empfängt, das von einem außerhalb angeordneten Objekt reflektiert wird, und ein optisches System (130) aufweist, das das von der Lichtquelle (110) emittierte Emissionslicht nach außen richtet und das Reflexionslicht zu dem Lichtempfangselement (1201) richtet, wobei das Steuerverfahren aufweist:
einen Steuerschritt zum Ausführen eines Prozesses zum Reduzieren von elektrischen Ladungen, die in dem Lichtempfangselement (1201) durch internes Reflexionslicht angesammelt werden, das durch Emission des Emissionslichts zu einem Zeitpunkt erzeugt wird, bevor das Lichtempfangselement (1201) das reflektierte Licht empfängt, und
einen Steuerschritt zum Bestimmen eines Timings zum Beenden des Prozesses gemäß einem unteren Grenzwert einer Entfernung, die durch die Lichtabtastvorrichtung (10) gemessen werden soll,
wobei das Verfahren **dadurch gekennzeichnet ist, dass**
das Lichtempfangselement (1201) über ein Schaltelement (1204) mit einem Erdungspunkt verbunden ist, und
das Steuerverfahren ferner einen Schritt des Versetzens des Schaltelements (1204) in einen AUS-Zustand, während die Lichtabtastvorrichtung (10) eine Entfernung misst, und als den Prozess das Schaltelement (1204) in einen EIN-Zustand versetzt.

7. Steuerverfahren nach Anspruch 6,
wobei das Steuerverfahren ferner einen Schritt des Bestimmens eines Timings zum Starten des Prozesses gemäß einem Emissionstiming des Emissionslichts oder einem oberen Grenzwert einer Entfernung, die durch die Lichtabtastvorrichtung (10) gemessen werden soll, aufweist.

8. Lichtabtastvorrichtung (10), die aufweist:
eine Lichtquelle (110), die Emissionslicht emittiert;
ein Lichtempfangselement (1201), das Reflexionslicht des Emissionslichts empfängt, das von einem außerhalb angeordneten Objekt reflektiert wird;
ein optisches System (130), das das von der Lichtquelle (110) emittierte Emissionslicht nach außen richtet und das Reflexionslicht zum Lichtempfangselement (1201) richtet; und
eine Steuereinheit (140), die einen Prozess zum Reduzieren von elektrischen Ladungen ausführt, die in dem Lichtempfangselement (1201) durch internes Reflexionslicht angesammelt werden, das durch Emission des Emissionslichts zu einem Zeitpunkt erzeugt wird, bevor das Lichtempfangselement (1201) das reflektierte Licht empfängt,
wobei die Steuereinheit (140) eine Entfernung zwischen einer aktuellen Position der Lichtabtastvorrichtung (10) oder eines sich bewegenden Objekts, an dem die Lichtabtastvorrichtung (10) angebracht ist, und dem Objekt berechnet und mindestens ein Timing zum Starten des Prozesses und/oder ein Timing zum Beenden des Prozesses basierend auf der berechneten Entfernung bestimmt,
**dadurch gekennzeichnet, dass**
das Lichtempfangselement (1201) über ein Schaltelement (1204) mit einem Erdungspunkt verbunden ist, und
die Steuereinheit (140) das Schaltelement (1204) in einen AUS-Zustand versetzt, während die Lichtabtastvorrichtung (10) eine Entfernung misst, und als den Prozess das Schaltelement (1204) in einen EIN-Zustand versetzt.

## Revendications

1. Dispositif de balayage optique (10), comprenant :
une source de lumière (110) émettant une lumière d'émission ;
un élément récepteur de lumière (1201) recevant la lumière de réflexion de la lumière d'émission réfléchie par un objet disposé à l'extérieur ;
un système optique (130) dirigeant vers l'extérieur la lumière d'émission émise par la source de lumière (110) et dirigeant la lumière de réflexion vers l'élément récepteur de lumière (1201) ; et
une unité de commande (140) exécutant un processus de réduction des charges électriques accumulées dans l'élément récepteur de lumière (1201) par la lumière de réflexion interne générée par émission de la lumière d'émission à un moment antérieur à la réception de la lumière réfléchie par l'élément récepteur de lumière (1201),
où l'unité de commande (140) détermine un moment d'arrêt du processus en fonction d'une valeur limite inférieure d'une distance à mesurer par le dispositif de balayage optique (10),
**caractérisé en ce que**
l'élément récepteur de lumière (1201) est connecté à un point de terre par un élément de commutation (1204), et
l'unité de commande (140) désactive l'élément de commutation (1204) pendant que le dispositif de balayage optique (10) mesure une distance et active l'élément de commutation (1204) lors du processus.

2. Dispositif de balayage optique (10) selon la revendication 1,
où l'élément récepteur de lumière (1201) est une photodiode à avalanche.

3. Dispositif de balayage optique (10) selon la revendication 1 ou la revendication 2,
où l'unité de commande (140) détermine un moment d'initialisation du processus en fonction d'un moment d'émission de la lumière d'émission ou d'une valeur limite supérieure d'une distance à mesurer par le dispositif de balayage optique (10).

4. Dispositif de balayage optique (10) selon l'une des revendications 1 à 3,
où l'unité de commande (140) détermine un moment d'initialisation du processus en fonction d'un moment d'émission de la deuxième lumière d'émission émise après la première lumière d'émission émise par la source de lumière (110).

5. Dispositif de balayage optique (10) selon l'une des revendications 1 à 4,
où ledit dispositif de balayage optique (10) est un dispositif de détection et de télémétrie par ondes lumineuses (LIDAR).

6. Procédé de commande d'un dispositif de balayage optique (10) comprenant une source de lumière (110) émettant une lumière d'émission, un élément récepteur de lumière (1201) recevant la lumière de réflexion de la lumière d'émission réfléchie par un objet disposé à l'extérieur, et un système optique (130) dirigeant vers l'extérieur la lumière d'émission émise par la source de lumière (110) et dirigeant la lumière de réflexion vers l'élément récepteur de lumière (1201), ledit procédé de commande comprenant :
une étape de commande consistant à exécuter un processus de réduction des charges électriques accumulées dans l'élément récepteur de lumière (1201) par la lumière de réflexion interne générée par émission de la lumière d'émission à un moment antérieur à la réception de la lumière réfléchie par l'élément récepteur de lumière (1201), et
une étape de commande consistant à déterminer un moment d'arrêt du processus en fonction d'une valeur limite inférieure d'une distance à mesurer par le dispositif de balayage optique (10),
ledit procédé étant **caractérisé en ce que**
l'élément récepteur de lumière (1201) est connecté à un point de terre par un élément de commutation (1204), et
le procédé de commande comprend en outre une étape consistant à désactiver l'élément de commutation (1204) pendant que le dispositif de balayage optique (10) mesure une distance et à activer l'élément de commutation (1204) lors du processus.

7. Procédé de commande selon la revendication 6,
où ledit procédé de commande comprend en outre une étape consistant à déterminer un moment d'initialisation du processus en fonction d'un moment d'émission de la lumière d'émission ou d'une valeur limite supérieure d'une distance à mesurer par le dispositif de balayage optique (10).

8. Dispositif de balayage optique (10), comprenant :
une source de lumière (110) émettant une lumière d'émission ;
un élément récepteur de lumière (1201) recevant la lumière de réflexion de la lumière d'émission réfléchie par un objet disposé à l'extérieur ;
un système optique (130) dirigeant vers l'extérieur la lumière d'émission émise par la source de lumière (110) et dirigeant la lumière de réflexion vers l'élément récepteur de lumière (1201) ; et
une unité de commande (140) exécutant un processus de réduction des charges électriques accumulées dans l'élément récepteur de lumière (1201) par la lumière de réflexion interne générée par émission de la lumière d'émission à un moment antérieur à la réception de la lumière réfléchie par l'élément récepteur de lumière (1201),
où l'unité de commande (140) calcule une distance entre une position actuelle du dispositif de balayage optique (10) ou un objet mobile sur lequel le dispositif de balayage optique (10) est monté et l'objet, et détermine au moins un moment d'initialisation du processus et/ou un moment d'arrêt du processus sur la base de la distance calculée, **caractérisé en ce que**
l'élément récepteur de lumière (1201) est connecté à un point de terre par un élément de commutation (1204), et
l'unité de commande (140) désactive l'élément de commutation (1204) pendant que le dispositif de balayage optique (10) mesure une distance et active l'élément de commutation (1204) lors du processus.
